# EUROPEAN PATENT APPLICATION

(11) **EP 2 075 464 A2**
(43) Date of publication of application: **01.07.2009**
(21) Application number: 08170929.7
(22) Date of filing: 08.12.2008
(51) Int. Cl.: F03D 11/00, F03D 11/04

(54) **Forward leaning tower top section**

(30) Priority: 27.12.2007 US 964967
(71) Applicant: General Electric Company, Schenectady, NY 12345 (US)
(72) Inventor: Nies, Jacob Johannes, 8042 HA, Zwolle (NL)
(74) Representative: Bedford, Grant Richard

(57) **Abstract**

A support structure (120) for a baseframe of a nacelle (22) or the nacelle of a wind turbine is described. The wind turbine (100) has a tower (20) with at least one lower tower section, wherein the at least one lower tower section defines a vertical axis (20a) of the tower, a yaw bearing (130), the nacelle and a hub (26). The supports structure includes a lower side; an upper side; wherein the support structure has a support structure axis being defined as extending through the center of the lower side and the center of the upper side, and wherein the support structure is adapted to be mounted to a wind turbine such that the support structure axis is inclined relative to the vertical axis of the tower.

## Description

The present invention relates generally to wind turbines and methods of manufacturing wind turbines. In particular it relates to towers of a wind turbine, yaw bearing and nacelle support structures of a wind turbine. Specifically, it relates to a support structure, a wind turbine and a method of manufacturing a wind turbine.

Wind turbines are experiencing increasing demand. Therefore, large multi-megawatt wind turbines are being installed in many locations throughout the world. With the increasing demand also a further improvement of the operation parameters has to be considered. On the one hand, the power output should be optimized. On the other hand, the requirements for a safety shut down of the wind turbine should be changed such that the wind turbine has to be shut down less often. This results in an improved annual energy output. Accordingly, there is a desire to construct wind turbines such that operational parameters can be chosen for improving energy production, whereby the necessity for considering safety aspects during control of the operation parameters is reduced.

In view of the above, according to various aspect of the present invention a support structure, a wind turbine and a method of manufacturing a wind turbine are provided.

Further aspects, advantages and features of the present invention are apparent from the dependent claims, the description and the accompanying drawings.

According to a first embodiment a support structure for a nacelle of a wind turbine having a tower with at least one lower tower section, wherein the at least one lower tower section defines a vertical axis of the tower, a yaw bearing, the nacelle and a hub, is provided. The structure includes a lower side facing the yaw bearing, an upper side facing the nacelle, wherein the support structure has a support structure axis being defined as extending through the center of the lower side and the center of the upper side, and wherein the support structure is adapted to be mounted to a wind turbine such that the support structure axis is inclined relative to the vertical axis of the tower.

According to another embodiment a wind turbine is provided. The wind turbine includes a tower with at least one lower tower section, wherein the at least one lower tower section defines a vertical axis of the tower, a yaw bearing, a nacelle, a rotor having a rotor axis, a rotor diameter and at least one rotor blade, a support structure having lower side facing the yaw bearing and an upper side facing the nacelle, wherein the support structure has a length to provide a distance of the yaw bearing to the rotor axis of 2 % of the rotor diameter to 70 % of the rotor diameter and wherein the support structure is adapted for increasing the distance between the rotor blade and the vertical axis of the tower as compared to a tower section extending along the vertical axis of the tower.

According to yet another embodiment, a method of manufacturing a wind turbine is provided. The method includes mounting a first tower portion on a foundation, mounting at least a further tower portion above the first tower portion, wherein the first and/or the second tower portions define a vertical tower axis, mounting a yaw bearing onto the at least further tower portion, mounting an inclined tower section onto the yaw bearing, the inclination shifting the center of gravity of the wind turbine towards a rotor of the wind turbine, and mounting a nacelle above the inclined tower section.

Various aspects and embodiments of the present invention will now be described in connection with the accompanying drawings, in which:
Fig. 1 shows a schematic view of a wind turbine having a forward leaning tower section according to embodiments described herein;
Fig. 2 shows a schematic view of a wind turbine having a forward leaning tower section according to further embodiments described herein; and
Fig. 3 shows a schematic view of a wind turbine having a forward leaning tower section according to yet further embodiments described herein.

Reference will now be made in detail to the various embodiments of the invention, one or more examples of which are illustrated in the figures. Each example is provided by way of explanation of the invention, and is not meant as a limitation of the invention. For example, features illustrated or described as part of one embodiment can be used on or in conjunction with other embodiments to yield yet a further embodiment. It is intended that the present invention includes such modifications and variations.

In order to optimize, for example, the Danish concept of wind turbines, a plurality of parameters is considered. As an example the distance between the rotor blade and the tower, on which the nacelle is mounted, has to be considered by a designer of a wind turbine. Thereby, during operation it has to be avoided that the tip of the rotor blade can touch the top of the tower, when the rotor blade bends under operation or extreme conditions. Accordingly, a designer can adjust one or more parameters of the group consisting of: the blade stiffness, pre-bending of the blade, the cone of the blade, the hub cone, the tilt angle of the rotor blades, the distance of the hub center relative to the flange for mounting the nacelle to the tower, the distance of the flange for mounting the nacelle to the tower relative to the tower center, the tower diameter, and combinations thereof.

The attempt to sufficiently increase the distance between the blade tip and the tower top results in increasing costs due to additional material that has to be provided and may result in a reduced rated power because a compromise between optimum operation condition and operation safety or the like has to be made. Further, it might result in a reduced annual energy production because the wind turbine might be switched off for safety reasons if the distance between the tip of a bended blade and the tower top is not sufficiently large.

Generally, the tower of wind turbines carries the nacelle and, thus, the rotor. Towers for wind turbines may be steel towers, e.g. tubular steel towers, lattice towers, or concrete towers.

A plurality of commonly designed wind turbines includes a tubular steel tower. Thereby, the steel tower can be manufactured in sections of 20 to 40 m. According to some embodiments described herein, the sections of the tower can include flanges at both ends, that is, the lower and the upper ends along the vertical axis of the tower of the wind turbine. The tower sections can be fixed together by, for example, bolts in order to build up the tower. According to some embodiments, which can be combined with other embodiments described herein, the tower can be conical with the diameter increasing towards the base. Thereby the strengths can be increased and material can be saved.

According to other embodiments, lattice towers can be used, which are manufactured by using welded steel profiles. Thereby, the tower can be built up like a lattice and the reduced amount of material used for the tower can reduce costs.

According to embodiments described herein, which can be combined with other embodiments described herein, the tower can provide a hub height of over 80 m and may have a diameter of at least several meters, e.g., 3 - 8 m at the base. Generally, different sizes of wind turbines, e.g., smaller systems with a power output of, for example, 500 kW to 1 MW, or larger systems with a power output of, for example 2.5 MW to 5 MW exist. A height of the tower can, for example be in a range of 60 to 150 m. Less tall wind turbines may also have a tower height of 50 m,30 m or lower.

For an upwind turbine the rotor is positioned on the windward side of the tower and the nacelle. Thereby, upwind turbines suffer from the sufficiency of an adequate clearance of the rotor blade tips and the tower. According to other embodiments, which can be combined with embodiments described herein, also downwind wind turbines may benefit from the additional clearance of the tip of a rotor blade from the tower. Generally, in gusty conditions which may include gusts coming from different directions or during a braking event a rotor blade may bent forward and backward. Accordingly, a "backward" leaning tower may improve the operation condition for a downwind turbine.

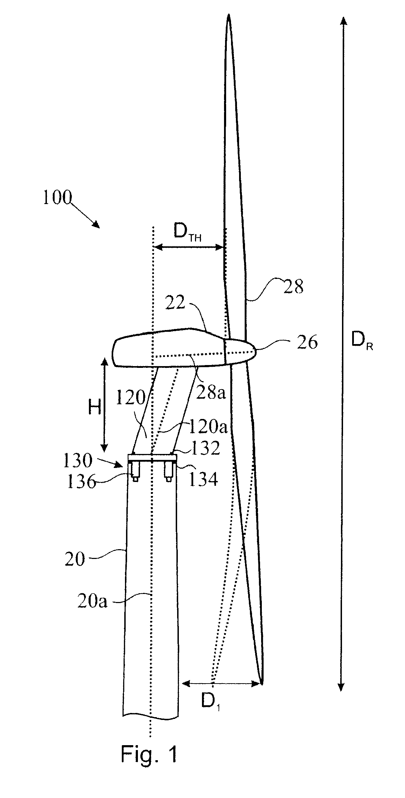

Figure 1 shows a wind turbine 100. In figure 1 an upper section of the tower 20 of the wind turbine 100 is shown. According to different embodiments, the plurality of tower sections can be provided below the section shown in figure 1. Further, a lower tower section can be mounted on a foundation or the like. The tower 20, and, in particular the lower tower section can define the vertical axis 20a of the tower.

The nacelle 22 is mounted at the top of the wind turbine 100. Typically, the baseframe (not shown) having a horizontal extending portion is provided in the nacelle. The baseframe can, on the one hand, connect the nacelle to the tower 20 or to the support structure 120 of the tower. On the other hand, the nacelle carries wind turbine components like the generator, a gear, or other components. According to other embodiments, additional frames like the generator frame might be provided for carrying certain components of the wind turbine, which are located in the nacelle 22. The baseframe may also be denoted as the bedplate.

The hub 26 is mounted to the nacelle and carries the rotor blades 28. The rotor blades 28 are part of the rotor with the rotor diameter D_{R}. The wind turbine 100 includes three rotor blades 28. According to other embodiments one, two, or four rotor blades may be included in the wind turbine. The rotation axis of the hub 26, which can according to some embodiments be the axis of the main shaft, defines the rotor axis 28a. According to different embodiments, the rotor axis might for some embodiments, which can be combined with other embodiments inclined by an angle of 2° to 5°, e.g., 3°.

According to the embodiments, which are illustrated with respect to figure 1, additionally a support structure 120 and yaw bearing 130 are provided. The yaw bearing 130 is on the one hand mounted to the tower 20 by, for example, bolts 134 and is on the other hand mounted to the support structure 120 by the bolts 132. Further, a drive 136 with motors can be provided to rotate the upper portion of the wind turbine to adjust the wind turbine 100 according to the wind direction.

As shown by arrow D1, the tip of the rotor blade 28 has a distance from the tower 20. During operation or extreme events, it is possible that the rotor blade bends due to the forces of the wind. For an upward wind turbine, bending of the rotor blade 28 results in a reduced distance of the rotor blade tip to the tower. This is indicated by dotted lines in figure 1. For safety reasons and other concerns, a minimal distance between the rotor blade tip and the tower has to be given under all operational circumstances. Accordingly, it is desirable to adjust the operation parameters and/or the construction of the wind turbine such that the tip of the rotor blade 28 can not touch the tower 20.

In light of the above, according to embodiments described herein, the support structure 120 provides a forward leaning support portion, e.g., in the form of a tower top section, such that the distance of the rotor blade to the tower is increased.

According to different embodiments, the support structure 120 has a lower flange connected to the yaw bearing and an upper flange connected to the nacelle 22, for example, the baseframe of the nacelle. An axis between the center of the two flanges provides an incline axis 120a of the support structure 120. According to typical embodiments described herein, the center is to be understood as the geometrical center of the cross section of the respective sides of the support structure. Thereby, the cross-section can be, for example, a horizontal cross-section of a side or a flange in a mounting orientation of the support structure. In figure 1 the height of the support structure is indicated by arrow H. Further the distance D_{TH} indicates the distance between the hub and the vertical axis 20a of the tower 20. The angle between the vertical axis 20a of the tower 20 and the axis 120a of the support structure 120 gives the angle of inclination of the support structure.

According to some embodiments described herein, the support structure, as a tower top section, is inclined leaning forward towards the hub 26. Thereby, the blades have a bigger margin before touching the tower when they bend during operation. According to yet further embodiments, the yaw bearing is provided at the position between the tower 20 and the support structure 120 in order to enable a bigger margin independent of the wind direction.

According to embodiments described herein, the inclination of the axis 120a of the support structure 120 with respect to the axis 20a of the tower 20 results in an increase in the distance D_{TH}. Thus, parameter optimization of, e.g., a Danish concept wind turbine with respect to blade stiffness, blade pre-band and cone, hub cone, tilt angle, distance of the hub center to the flange, distance of the flange to the tower center and the tower diameter can be conducted in light of an optimized energy generation since the risk of the tip of the rotor blade 28 touching the tower 20 is reduced.

According to further embodiments, which can be combined with other embodiments described herein, the length H of the incline support structure 120 is about 2 - 15 times the tower diameter at the top. Typically this is the portion at which the yaw bearing 130 is mounted to the tower 20 or at which the nacelle 22 is mounted to the tower and/or the support structure.

The above mentioned length of the incline support portion 120 provides a compromise between the desired shift forward of the hub relative to the tower and a load increase on the yaw bearing.

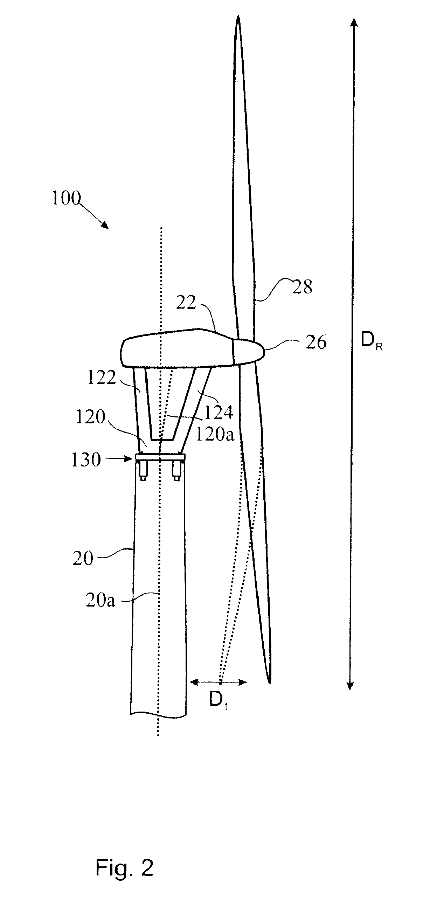

According to other embodiments, which are illustrated with respect to figure 2, the support structure 120 can be a structure having several portions 122 and 124, wherein one portion 122 is mounted towards the back of the nacelle 22 and the other portion 124 is mounted towards the front of the nacelle. In light of the yaw bearing 130 not being directly connected to the nacelle or the horizontal baseframe portion the mounting structure of the supporting component of the nacelle can be arranged differently and/or can be simplified.

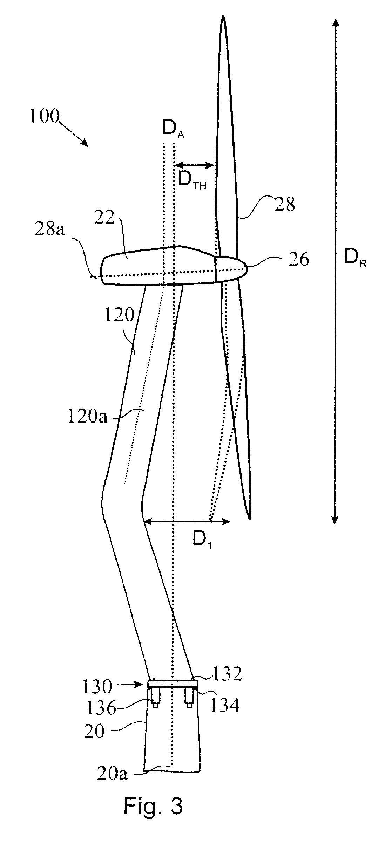

Further, a less preferred solution is shown in figure 3, wherein the support structure 120 has a forward leaning and backward leaning portion. Thereby, the tower section has to be provided to be sufficiently long such that one blade length is adapted to be at the recess at the desired height. Thereby, as shown in figure 3, the mounting position of the support structure to the nacelle can be moved backward relative to the tower axis. According to further embodiments, the support structure shown in fig. 3 may be modified such that there is no offset or a forward offset from the nacelle mounting position and the tower axis.

As described above, the forward leaning wind turbine was described with respect to a forward leaning support structure for the nacelle which can be referred to as an upper portion of the tower. However, according to further embodiments, the support structure 120 might also be considered to be a portion of the nacelle such that it is rigidly connected to the baseframe. Thus, the support structure could be considered as an extension of the baseframe supporting the horizontal portion of a baseframe. It is to be understood, that also an extension of the baseframe, which extends the below to horizontal baseframe portion within the nacelle, is considered a support structure as denoted herein since the portion below the baseframe, which is the frame on which components like the generator the gear, or the like are mounted supports the horizontal portion of the baseframe.

According to yet further embodiments, which can be combined with other embodiments described herein, the distance D_{TH} can be in a range of 2 to 7 m, typically in a range of 3 to 4.5 m. The diameter of the yaw bearing can, for example, be in the range of 1.5 to 3 m, typically 2 m. The height from the yaw bearing to the rotor axis (see H in figure 1) can be in the range of 1.5 m to 70 m, typically at least 3 m for a 3 MW wind turbine or at least 1.5 MW for a 1 MW wind turbine. According to yet further embodiments, the ratio of the height H to the diameter of the yaw bearing can be in a range of 40% to 80%, typically 60 % to 70%. According to yet even further embodiments, which can be combined with other embodiments described herein, the ratio of the height H to the rotor diameter can be in the range of 2% to 70%, typically in the range of 5% to 60%.

According to different embodiments, which can be combined with other embodiments described herein, the diameter of the yaw bearing referred to herein can be defined as the diameter of the raceways of the yaw bearing or, in case of sliding surfaces in the yaw bearing, an average diameter of the sliding surfaces. Further, in case of two bearings above one another the diameter can be given by the biggest yaw bearing raceway diameter and the distance between the bearings.

According to yet further embodiments, which can be combined with other embodiments described herein, the support structure 120 can be provided as a tube, a plurality of tubes or a lattice, like a lattice tower. Further, the support structure can be provided above tubular tower sections or lattice tower sections.

Even though embodiments described herein may result in a higher bending moment on the yaw bearing, a shorter nacelle can be provided for a wind turbine and the necessity for compromises in cone and tilt angle with regard to power production can be reduced. According to yet further embodiments, the structure of the yaw bearing between the tower and the support structure 120 may result in the fact that no threaded holes are required in the yaw bearing ring. This can reduce the costs for manufacturing the wind turbine.

According to yet other embodiments, which can be combined with other embodiments described herein, the forward inclination, that is the angle between the axis 120a and the vertical axis 20a of the tower is at least 1°, typically between 4° to 20°, e.g., 5° or 10°.

As mentioned above, the support structure can according to some embodiments be considered the tower section that is inclined. According to other embodiments, it may be considered a protrusion of a horizontal extending portion of the baseframe.

According to some embodiments a support structure for a nacelle of a wind turbine having a tower with at least one lower tower section, wherein the at least one lower tower section defines a vertical axis of the tower, a yaw bearing, the nacelle and a hub can be provided. The structure includes a lower flange (side) connectable to the yaw bearing or facing the yaw bearing, an upper flange (side) connectable to the nacelle or facing the nacelle, wherein the support structure has a support structure axis being defined as extending through the center of the lower flange (side) and the center of the upper flange (side), and wherein the support structure is adapted to be mounted to a wind turbine such that the support structure axis is inclined relative to the vertical axis of the tower.

According to yet further additional or alternative options for modifications of the structure the dimension between the lower flange and the upper flange along a direction of the support structure axis can be smaller than 50 m, typically between 1 m and 30 m; the support structure can be adapted to be mounted to a wind turbine such that the support structure axis is inclined relative to the vertical axis of the tower towards the hub, and/or the support structure is adapted to be mounted to a wind turbine such that the support structure axis is inclined relative to the vertical axis of the tower by an angle of at least 4°.

According to yet further embodiments, which can be combined with other embodiments described herein, the support structure can be adapted to be mounted to a wind turbine such that the support structure axis is inclined relative to the vertical axis of the tower such that the distance between the hub and the vertical axis of the tower is increased by at least 15 %.

According to other embodiments a wind turbine is provided. The wind turbine includes a tower with at least one lower tower section, wherein the at least one lower tower section defines a vertical axis of the tower, a yaw bearing, a nacelle, a rotor having a rotor axis, a rotor diameter and at least one rotor blade, and a support structure having a lower flange connectable to the yaw bearing and an upper flange connectable to the nacelle, wherein the support structure is constructed to act as a forward leaning tower section for increasing the distance between the rotor blade and the vertical axis of the tower as compared to a tower section extending along the vertical axis of the tower.

According to yet additional or alternative options for modifying embodiments of the wind turbine the support structure can have a support structure axis being defined as extending through the center of the lower flange and the center of the upper flange, and wherein the support structure is adapted to be mounted to a wind turbine such that the support structure axis is inclined relative to the vertical axis of the tower, the support structure a length to provide a distance of the yaw bearing to the rotor axis of 1 m to 50m, the support structure a length to provide a distance of the yaw bearing to the rotor axis of 2 % the rotor diameter to 70 % the rotor diameter. Further additionally or alternatively, the support structure is adapted to be mounted to a wind turbine such that the support structure axis is inclined relative to the vertical axis of the tower towards the hub, the support structure is adapted to be mounted to a wind turbine such that the support structure axis is inclined relative to the vertical axis of the tower by an angle of at least 10°, and/or the support structure is adapted to be mounted to a wind turbine such that the support structure axis is inclined relative to the vertical axis of the tower such that the distance between the hub and the vertical axis of the tower is increased by at least 30 %.

According to embodiments described herein the distance between the rotor blade and the tower axis can be 6 m in a non-operational condition.

According to other embodiments a method of manufacturing a wind turbine is provided. The method includes mounting a first tower portion on a foundation, mounting at least a further tower portion above the first tower portion, wherein the first and/or the second tower portions define a vertical tower axis, mounting a yaw bearing onto the at least further tower portion, mounting an inclined tower section onto the yaw bearing, the inclination shifting the center of gravity of the wind turbine towards a rotor of the wind turbine, and mounting a nacelle above the inclined tower section.

Thereby, the nacelle can be mounted on the inclined power section by mounting the baseframe of the nacelle to the inclined tower section. The nacelle can be mounted on the inclined tower section by pre-manufacturing a component including the inclined tower section and the baseframe, wherein as a further option the pre-manufactured component can be a single piece component.

This written description uses examples to disclose the invention, including the preferred mode, and also to enable any person skilled in the art to make and use the invention. While the invention has been described in terms of various specific embodiments, those skilled in the art will recognize that the invention can be practiced with modification within the spirit and scope of the claims. Especially, mutually non-exclusive features of the embodiments described above may be combined with each other. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

Various aspects and embodiments of the present invention are now defined in the following numbered clauses:
1. A support structure for a baseframe of a nacelle or the nacelle of a wind turbine having a tower with at least one lower tower section, wherein the at least one lower tower section defines a vertical axis of the tower, a yaw bearing, the nacelle and a hub, comprising:
   a lower side;
   an upper side;
   wherein the support structure has a support structure axis being defined as extending through the center of the lower side and the center of the upper side, and wherein the support structure is adapted to be mounted to a wind turbine such that the support structure axis is inclined relative to the vertical axis of the tower.
2. The support structure according to clause 1, wherein the dimension between the lower side and the upper side along a direction of the support structure axis is between 1 m and 50 m.
3. The support structure according to any preceding clause, wherein the support structure is adapted to be mounted to a wind turbine such that the support structure axis is inclined relative to the vertical axis of the tower towards the hub.
4. The support structure according to any preceding clause, wherein the support structure is adapted to be mounted to a wind turbine such that the support structure axis is inclined relative to the vertical axis of the tower by an angle of at least 4°.
5. The support structure according to any preceding clause, wherein the support structure is adapted to be mounted to a wind turbine such that the support structure axis is inclined relative to the vertical axis of the tower such that the distance between the hub and the vertical axis of the tower is increased by at least 15 % by the inclination.
6. A wind turbine, comprising:
   a tower with at least one lower tower section, wherein the at least one lower tower section defines a vertical axis of the tower;
   a yaw bearing;
   a nacelle;
   a rotor having a rotor axis, a rotor diameter and at least one rotor blade;
   a support structure having lower side facing the yaw bearing and an upper side facing the nacelle or the base frame of the nacelle, wherein the support structure has a length to provide a distance of the yaw bearing to the rotor axis of 2 % of the rotor diameter to 70 % of the rotor diameter and wherein the support structure is adapted for increasing the distance between the rotor blade and the vertical axis of the tower as compared to a tower section extending along the vertical axis of the tower.
7. The wind turbine according to clause 6, wherein the support structure has a support structure axis being defined as extending through the center of the lower side and the center of the upper side, and wherein the support structure is adapted to be mounted to a wind turbine such that the support structure axis is inclined relative to the vertical axis of the tower.
8. The wind turbine according to clause 6 or 7, wherein the support structure has a length to provide a distance of the yaw bearing to the rotor axis of 3 m to 70 m.
9. The wind turbine according to any of clauses 6 to 8, wherein the support structure is constructed to act as a forward leaning tower section.
10. The wind turbine according to any of clauses 6 to 9, wherein the support structure is adapted to be mounted to a wind turbine such that the support structure axis is inclined relative to the vertical axis of the tower towards the hub.
11. The wind turbine according to any of clauses 6 to 10, wherein the support structure is adapted to be mounted to a wind turbine such that the support structure axis is inclined relative to the vertical axis of the tower by an angle of at least 4°.
12. The wind turbine according to any of clauses 6 to 11, wherein the support structure is adapted to be mounted to a wind turbine such that the support structure axis is inclined relative to the vertical axis of the tower such that the distance between the hub and the vertical axis of the tower is increased by at least 15 % by the inclination.
13. The wind turbine according to any of clauses 6 to 12, further comprising a further yaw bearing being below or above the yaw bearing
14. The wind turbine according to any of clause 6 to 13, wherein the distance between the rotor blade and the tower axis is 6 m in a non-operational condition.
15. A method of manufacturing a wind turbine, comprising:
   mounting a first tower portion on a foundation;
   mounting at least a further tower portion above the first tower portion, wherein the first and/or the second tower portions define a vertical tower axis;
   mounting a yaw bearing onto the at least further tower portion;
   mounting an inclined tower section onto the yaw bearing, the inclination shifting the center of gravity of the wind turbine towards a rotor of the wind turbine; and
   mounting a nacelle or a base frame of the nacelle above the inclined tower section.
16. The method according to clause 15, wherein the nacelle is mounted on the inclined power section by mounting the baseframe of the nacelle to the inclined tower section.
17. The method according to clause 15 or 16, wherein the nacelle is mounted on the inclined tower section by pre-manufacturing a component including the inclined tower section and the baseframe.
18. The method according to any of clauses 15 to 17, wherein the pre-manufactured component is a single piece component.

## Claims

1. A support structure (120) or a baseframe of a nacelle (22) or the nacelle of a wind turbine (100) having a tower (20) with at least one lower tower section, wherein the at least one lower tower section defines a vertical axis of the tower, a yaw bearing (130), the nacelle and a hub (26), comprising:
a lower side;
an upper side;
wherein the support structure (120) has a support structure axis (120a) being defined as extending through the center of the lower side and the center of the upper side, and wherein the support structure is adapted to be mounted to a wind turbine such that the support structure axis is inclined relative to the vertical axis (20a) of the tower towards the hub.

2. The support structure (120) according to claim 1, wherein the dimension between the lower side and the upper side along a direction of the support structure axis (120a) is between 1 m and 50 m.

3. The support structure (120) according to any of the preceding claims, wherein the support structure is adapted to be mounted to a wind turbine such that the support structure axis (120A) is inclined relative to the vertical axis (20a) of the tower by an angle of at least 4°.

4. A wind turbine (100), comprising:
a tower (20) with at least one lower tower section, wherein the at least one lower tower section defines a vertical axis (20a) of the tower;
a yaw bearing (130);
a nacelle (22);
a rotor having a rotor axis (28a), a rotor diameter and at least one rotor blade;
a support structure (120) having lower side facing the yaw bearing and an upper side facing the nacelle or the base frame of the nacelle, wherein the support structure has a length to provide a distance of the yaw bearing to the rotor axis of 2 % of the rotor diameter to 70 % of the rotor diameter and wherein the support structure is adapted for increasing the distance between the rotor blade and the vertical axis of the tower as compared to a tower section extending along the vertical axis of the tower.

5. The wind turbine (100) according to claim 4, wherein the support structure (120) has a support structure axis (120a) being defined as extending through the center of the lower side and the center of the upper side, and wherein the support structure is adapted to be mounted to a wind turbine such that the support structure axis is inclined relative to the vertical axis of the tower by an angle of at least 4°.

6. The wind turbine (100) according to any of claims 4 to 5, wherein the support structure (120) is constructed to act as a forward leaning tower section.

7. The wind turbine (100) according to any of claims 4 to 6, wherein the support structure (120) is constructed to act as a forward leaning tower section.

8. The wind turbine (100) according to any of claims 4 to 7, wherein the distance between the rotor blade (28) and the tower axis is 6 m in a non-operational condition.

9. A method of manufacturing a wind turbine (100), comprising:
mounting a first tower portion (20) on a foundation;
mounting at least a further tower portion above the first tower portion, wherein the first and/or the second tower portions define a vertical tower axis;
mounting a yaw bearing (130) onto the at least further tower portion;
mounting an inclined tower section onto the yaw bearing, the inclination shifting the center of gravity of the wind turbine towards a rotor of the wind turbine; and
mounting a nacelle (22) or a base frame of the nacelle above the inclined tower section.

10. The method according to claim 9, wherein the nacelle (22) is mounted on the inclined power section by mounting the baseframe of the nacelle to the inclined tower section (20).
